## Europäisches Patentamt
## European Patent Office
## Office européen des brevets

(11) Numéro de publication:

**0 022 003**
**A1**

(12) # DEMANDE DE BREVET EUROPEEN

(21) Numéro de dépôt: **80400911.6**

(22) Date de dépôt: **19.06.80**

(51) Int. Cl.³: **H 02 P 7/00**

(30) Priorité: **20.06.79 FR 7915809**

(43) Date de publication de la demande:
**07.01.81 Bulletin 81/1**

(84) Etats Contractants Désignés:
**AT BE CH DE GB IT LI LU NL SE**

(71) Demandeur: **Association dite: Gradient Groupe de Recherche de Royallieu (bât A)**
**Boite Postale 233**
**F-60206 Compiegne(FR)**

(72) Inventeur: **Berna, Michel**
**Chemin Censier**
**F-95330 Domont(FR)**

(72) Inventeur: **Seger,René**
**1 Clos Boissy**
**F-94450 Limeil Brevannes(FR)**

(72) Inventeur: **Vilain, Jean-Paul**
**96 rue de Machemont Petit Melicocq**
**F-60150 Thourotte(FR)**

(72) Inventeur: **Kant, Michel**
**6 Allée Guillaume de Flavy Domaine de Rimberlieu**
**Villers Sur Coudun F-60150 Thourotte(FR)**

(74) Mandataire: **Ducas, Michel et al,**
**Cabinet Boettcher 23, rue La Boétie**
**F-75008 Paris(FR)**

(54) Machine électrique à caractéristiques contrôlées et son application à un dispositif éolien.

(57) L'invention concerne une machine électrique à caractéristiques contrôlées et son application à un dispositif éolien. L'inducteur 22 et/ou l'induit comprennent au moins deux ensembles de bobinages indépendants 26, dans lequel le début et la fin de la conduction dans le temps et dans l'espace sont imposés par un processeur 42 à mémoire piloté par un signal représentatif de la vitesse et/ou de la position du champ magnétique et par un programme enregistré en mémoire.

EP 0 022 003 A1

./...

FIG. 4

Machine électrique à caractéristiques contrôlées et son application à un dispositif éolien.

La présente invention, due à Messieurs Michel Berna, Michel Kant et Jean-Paul Vilain du Laboratoire d'électromécanique de l'Université de Technologie de Compiègne et à Monsieur René Séger de la Société Aérowatt, concerne une machine électrique motrice ou génératrice, à courant continu ou alternatif, linéaire ou rotative, dont les caractéristiques peuvent être contrôlées à la demande, ainsi qu'un dispositif éolien comprenant une génératrice réalisée conformément à l'invention.

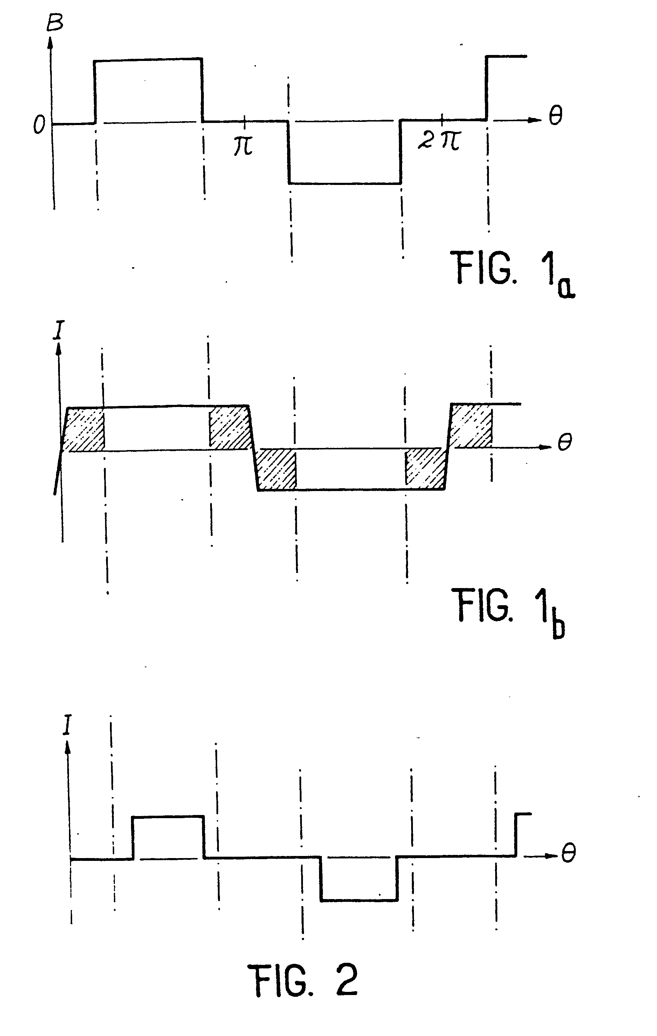

Dans les machines électriques connues, et quel que soit le type de ces machines, le courant électrique d'alimentation du bobinage induit lorsqu'il s'agit d'un moteur électrique, ou le courant délivré par ce bobinage lorsqu'il s'agit d'une génératrice, circule continuellement dans chaque spire du bobinage induit, tantôt dans un sens, tantôt dans l'autre, suivant le pôle de l'inducteur sous l'influence duquel il se trouve. Comme l'illustrent les figures 1a et 1b annexées, qui représentent respectivement les variations du champ magnétique créé par l'inducteur et le courant circulant dans une spire du bobinage induit en fonction de l'angle de rotation du rotor dans un moteur électrique à courant continu, il existe toute une zone, hachurée sur la figure 1b, pour laquelle le courant circulant dans le bobinage induit ne participe que trop faiblement à la création d'un couple et où ce courant dissipe inutilement de l'énergie par effet Joule lorsque la spire est située entre deux pôles de l'inducteur.

D'autre part, il est connu de réaliser des machines électriques dont la vitesse de rotation du rotor est variable. Cependant, dans de nombreuses applications, il est souhaitable de pouvoir contrôler les variations de la puissance en fonction de cette vitesse.

L'invention a principalement pour objet la réalisation d'une machine électrique dont les pertes totales (dans les circuits magnétique et électrique), sont minimales et dont les caractéristiques peuvent être contrôlées à la demande ; sur cette machine, on peut imposer une
ou plusieurs des caractéristiques suivantes :
- rendement maximal et fixe quelle que soit la vitesse,
- tension constante dans une large gamme de vitesses,
- couple constant dans une large gamme de vitesses,
- couple variable selon une fonction précise quelle que
soit la charge,
- rendement maximal et fixe quelle que soit la caractéristique de la machine mécanique d'entraînement (moteur
d'entraînement) lorsque le dispositif fonctionne en
générateur,
-  rendement maximal et fixe quelle que soit la caractéristique de la machine à entraîner lorsque le dispositif
fonctionne en moteur.

Dans ce but il est proposé une machine
électrique comprenant une partie fixe et une partie en mouvement et susceptible de transformer de l'énergie mécanique
en énergie électrique ou inversement au moyen d'un inducteur et d'un induit qui peuvent être situés indifféremment
sur la partie en mouvement ou sur la partie fixe. L'inducteur et/ou l'induit de cette machine possèdent un certain
nombre (deux au minimum) d'ensembles de bobinages indépendants dans lesquels le début et la fin de la conduction
dans le temps et dans l'espace sont imposés par un processeur à mémoire piloté, d'une part, par au moins un signal
de contrôle représentatif, par exemple, de la vitesse de
déplacement et/ou de la position du champ magnétique engendré par l'inducteur et, d'autre part, par un programme enregistré en mémoire, afin de modifier en temps réel les
caractéristiques de fonctionnement de la machine.

La division de l'induit et de l'inducteur en plusieurs ensembles de bobinages indépendants dans
lesquels on contrôle le début et la fin de la conduction au
moyen d'un processeur permet conformément à l'invention de
supprimer les pertes par effet Joule correspondant à la
partie hachurée de la figure 1b en limitant la conduction de chacun de ces ensembles à la période pendant laquelle cet ensemble se trouve sous l'influence d'un pôle de l'inducteur. En outre, il est possible de contrôler les caractéristiques de la machine en limitant la période de conduction de chaque ensemble de bobinages à une partie de la zone ainsi définie, comme l'illustre la figure 2 qui représente les variations du courant circulant dans une spire du bobinage induit en fonction de l'angle de rotation du rotor dans une machine alimentée en courant continu réalisée conformément à l'invention.

Conformément à une autre caractéristique de l'invention, le processeur contrôle, de plus, l'interconnexion d'au moins deux des ensembles de bobinages, ce qui revient à modifier le nombre de spires de chaque ensemble.

Selon un mode de réalisation préféré de l'invention, des moyens de détection sont prévus pour détecter la position instantanée du champ inducteur de la machine, le processeur délivrant des ordres de commande codés, et un moyen de commutation indépendant étant associé à chaque ensemble de bobinages pour commander l'ouverture d'un circuit comprenant ledit ensemble de bobinages ou la fermeture de ce circuit sur des niveaux de tension appropriés lorsque le champ inducteur occupe les positions correspondant aux ordres de commande codés. De préférence, les moyens de détection délivrent alors des signaux logiques dont l'ensemble est représentatif de la position instantanée du champ magnétique inducteur, l'un de ces signaux logiques ou un signal complémentaire étant appliqué à chacune des entrées codées d'un nombre pair de multiplexeurs commandés par le processeur pour délivrer à leur sortie le signal logique appliqué à l'entrée codée correspondante, les signaux logiques délivrés par chaque multiplexeur étant groupés deux à deux pour définir des ordres de connexion et/ou de commutation appliqués à chacun des moyens de commutation. Selon l'invention, chaque moyen de commutation peut alors comprendre deux séries de semi-conducteurs de puissance (transistors ou thyristors) sensibles aux ordres de connexion pour fermer le circuit de l'ensemble de bobinages correspondant sur le niveau de tension approprié.

Selon une première variante de l'invention, des moyens de disjonction sont associés à chaque moyen de commutation pour ouvrir durablement le circuit de l'ensemble de bobinages correspondant lorsque l'intensité du courant dépasse un seuil déterminé.

Selon une seconde variante de l'invention, des moyens de limitation de courant sont associés à chaque moyen de commutation pour ouvrir ou fermer le circuit de l'ensemble de bobinages correspondant lorsque l'intensité du courant est supérieure ou inférieure à un seuil déterminé, selon un fonctionnement en hacheur autorégulé.

Conformément à une autre caractéristique de l'invention, les ordres de commande codés délivrés par le processeur sont tels que les ordres de connexion appliqués à un ou plusieurs des moyens de commutation sont hachés, de telle sorte que la tension d'alimentation du ou des ensembles de bobinages correspondants est découpée à une fréquence déterminée, selon un fonctionnement en hacheur simple.

Conformément à une autre caractéristique de l'invention, les moyens de détection comprennent plusieurs détecteurs (optiques, magnétiques, capacitifs, acoustiques, etc...), répartis sur la partie fixe de la machine de façon à délivrer les signaux logiques caractérisant la position du champ magnétique inducteur.

Dans le cas le plus général, l'inducteur et l'induit sont divisés en plusieurs ensembles de bobinages indépendants dans lesquels on contrôle le passage du courant par les moyens décrits préalablement. Le réseau électrique sur lequel est branché l'inducteur peut être indifféremment de tension continue ou alternative (monophasée ou polyphasée). De même, l'induit peut soit être alimenté par un réseau de tension continue ou alternative (monophasée ou polyphasée), soit délivrer sur le réseau de tension continue ou alternative (monophasée ou polyphasée). Plusieu:

variantes peuvent être réalisées à partir du principe précédent :

- machine dont l'inducteur est un aimant permanent ;
- machine dont l'inducteur classique, alimentée directement à partir du réseau électrique (à tension continue ou alternative), engendre un champ fixe ou tourant dans l'espace. Dans ce cas le système logique ne contrôle que les bobinages de l'induit. On peut néanmoins diviser l'enroulement de l'inducteur en plusieurs parties ramenées à des bornes d'alimentation (mobiles ou fixes) et modifier la forme et l'intensité du champ magnétique créé par l'inducteur en utilisant le même processeur que celui qui détermine les périodes de conduction de chacun des ensembles de bobinages de l'induit ;
- machine dont l'induit, portant l'enroulement du type classique des machines à courant alternatif, est branché directement à l'avant des bornes (tournantes ou mobiles) sur le réseau électrique. Dans une telle machine, le processeur ne contrôle que les bobinages de l'inducteur ;
- une machine dont l'induit est fermé électriquement sur lui-même (type cage d'écureuil ou massif) ;
- machine dont l'inducteur est mixte et composé d'une partie bobinée et d'une partie constituée par un aimant permanent.

De façon à réduire la réaction d'induit à l'intérieur de l'inducteur, et selon encore une autre caractéristique de l'invention, l'inducteur est réalisé en un matériau magnétique fragmenté selon des surfaces sensiblement parallèles au champ magnétique engendré par l'inducteur, les différents fragments étant séparés par des lames en un matériau amagnétique. Dans ce cas, lorsque le matériau amagnétique est un matériau bon conducteur de l'électricité, les lames peuvent être connectées aux bagues d'alimentation pour véhiculer le courant d'excitation du bobinage de l'inducteur.

L'invention concerne également un dispositif éolien comprenant une hélice montée sur l'arbre d'entrée d'un mécanisme de transmission dont l'arbre de sortie entraîne en rotation le rotor d'une génératrice, ce dispositif se caractérisant en ce que la génératrice est une machine électrique réalisée conformément à l'invention.

On décrira maintenant, à titre d'exemple non limitatif, un mode de réalisation particulier de l'invention en se référant aux dessins annexés dans lesquels :

- les figures 1a et 1b représentent respectivement les variations du champ magnétique dans l'inducteur et du courant électrique dans l'une des spires de l'induit d'un moteur électrique à courant continu réalisé selon la technique antérieure,

- la figure 2 est une courbe illustrant la variation du courant dans l'une des spires de l'induit d'un moteur électrique réalisé conformément à l'invention,

- la figure 3 est une vue en perspective représentant schématiquement un dispositif éolien comprenant une génératrice réalisée conformément aux enseignements de la présente invention,

- la figure 4 représente l'ensemble de commande logique et électronique au moyen duquel les caractéristiques de la génératrice du dispositif éolien représenté sur la figure 3 sont contrôlées, et

- la figure 5 représente l'un des étages de commutation électronique de l'ensemble représenté sur la figure 4.

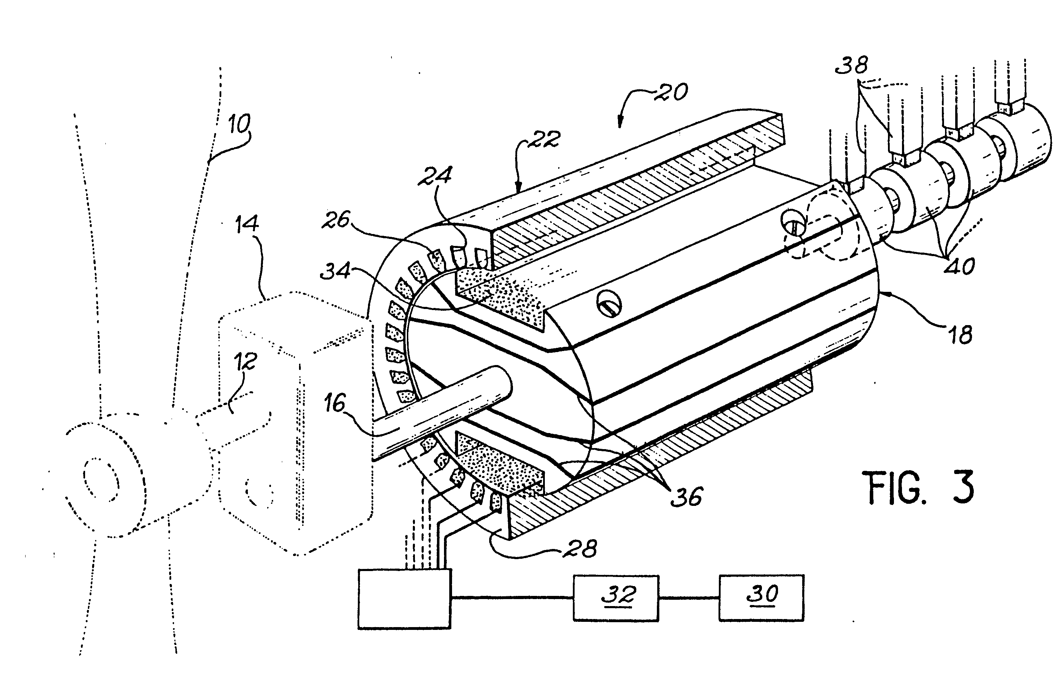

Comme le montre schématiquement la figure 3, un dispositif éolien comprend une hélice 10 montée sur l'arbre d'entrée 12 d'un mécanisme multiplicateur de transmission 14 dont l'arbre de sortie 16 entraîne le rotor 18 d'une génératrice électrique 20.

Afin de limiter la vitesse de rotation de l'arbre d'entrée 12 du mécanisme de transmission 14 à des valeurs raisonnables lorsque le vent frappant l'hélice 10 atteint des vitesses élevées, il est d'usage de prévoir entre l'hélice 10 et le mécanisme 14 des moyens permettant de régler la vitesse d'entraînement de l'arbre d'entrée 12 de ce dernier. Ainsi, par exemple, les brevets français Nos 1 553.046 et 71 19499 décrivent des hélices à pas variables, notamment par décrochement aérodynamique, alors que le brevet N° 2 355 178 décrit un frein à courant de Foucault permettant de réaliser cette régulation aérodynamique.

Dans le mode de réalisation représenté sur la figure 3, le générateur 20 comprend un stator 22 dans lequel est reçu le rotor 18, le stator 22 présentant des rainures longitudinales 24 dans lesquelles sont reçus les enroulements 26 de l'induit. Plus précisément, le stator 22 comporte trente-six encoches 24 dans lesquelles sont reçus trente-six enroulements 26 groupés deux à deux pour définir dix-huit ensembles de bobinages indépendants accessibles par leurs deux extrémités sur l'une 28 des faces terminales du stator. Comme l'illustre la figure 3, une extrémité de chacun des ensembles de bobinages constitués par les enroulements 26 est reliée à une extrémité correspondante des autres ensembles de bobinages, alors que l'autre extrémité de chacun desdits ensembles est reliée de façon indépendante à un ensemble de contrôle logique et électronique comprenant successivement un système logique de commande 30, et, pour chacun des ensembles de bobinages de l'induit, des étages de commutation 32. Cet ensemble de contrôle sera décrit plus en détail par la suite.

Dans le mode de réalisation représenté sur la figure 3, et de façon non limitative, le rotor 18 forme l'inducteur du générateur 20. Il est constitué par un électroaimant comprenant un noyau en matériau magnétique tel que du fer doux excité par un bobinage 34 alimenté en courant continu, de façon connue, par exemple au moyen de bagues 40 et de balais 38. Le noyau de l'électroaimant est, de préférence, fragmenté selon des surfaces sensiblement parallèles au champ magnétique engendré par le bobinage 34, les différents fragments étant séparés par des lames en un matériau amagnétique 36 tel que du permaloy ou du cuivre. Lorsque les lames 36 sont réalisées en un matériau bon conducteur de l'électricité tel que du cuivre, elles peuvent être connectées à des bagues pour véhiculer le courant d'excitation.

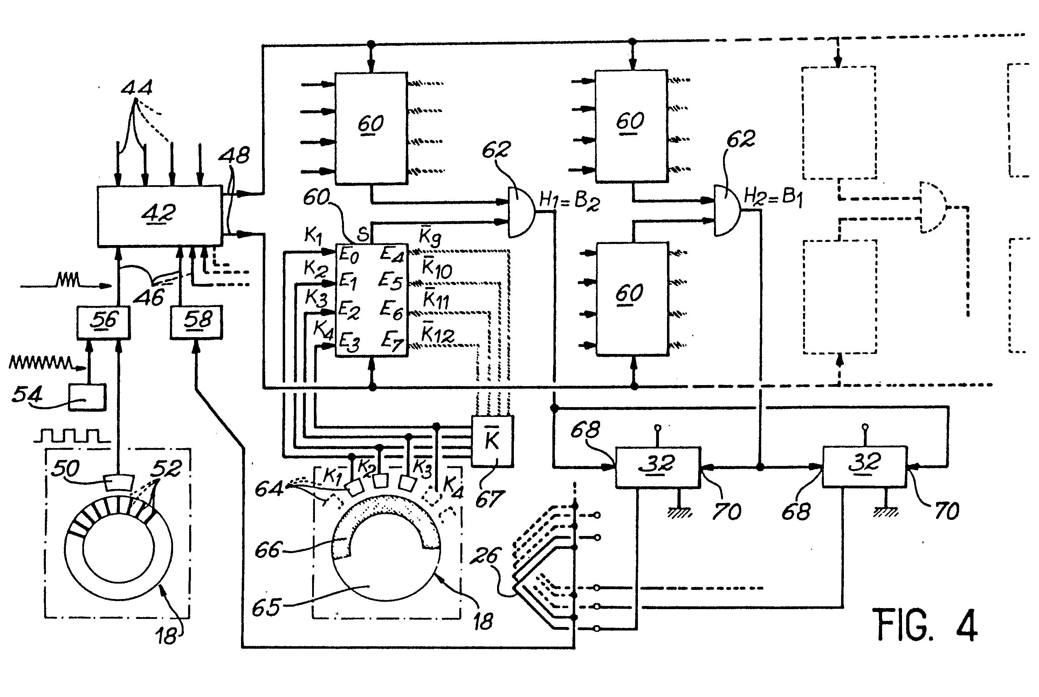

Conformément à l'invention, et comme le montre en particulier la figure 4, le système logique 30 est un processeur 42, de préférence du type microprocesseur, sensible à la fois à des paramètres de consigne 44 et à des paramètres de contrôle 46 pour délivrer des ordres de commande 48 visant à faire suivre par la génératrice 20 les consignes 44 en fonction des valeurs des différents paramètres de contrôle 46. Plus précisément, les paramètres de consigne 44 ont pour objet de définir le type de fonctionnement de la génératrice 20 envisagé. Ainsi, la génératrice 20 peut fonctionner, par exemple, à vitesse constante, à couple constant, à rendement optimum, etc... Les paramètres de contrôle 46 comprennent toujours la vitesse de rotation du rotor 18 et, le plus souvent, la valeur du courant dans les bobinages de l'induit 26. Les paramètres de contrôle 46 peuvent également comprendre des paramètres de sécurité tels que la température, la surintensité, etc...

La vitesse de rotation du rotor 18 est mesurée par un détecteur optique 50, tel qu'un phototransistor, monté sur le stator 22 et disposé en vis-à-vis d'une couronne de lignes radiales 52 successivement réfléchissantes et absorbantes formées sur le rotor. De préférence, les lignes réfléchissantes sont au nombre de soixante, ainsi que les lignes absorbantes, de telle sorte que le signal de vitesse délivré par le phototransistor 50 correspond directement à la vitesse de rotation du rotor 18 en tours/minute. Une horloge rapide 54, constituée par exemple par un multivibrateur, délivre des impulsions en continu. L⸱ nombre d'impulsions de l'horloge 54 correspondant à une demi-période du signal de vitesse délivré par le phototransistor 50 est déterminé par une logique de comptage 56 délivrant un signal binaire constituant le paramètre de contrôle 46 représentatif de la vitesse de rotation du rotor 18. Ce paramètre est transmis au microprocesseur 42.

Simultanément, un convertisseur analogique-digital 58, d'un type connu, est disposé entre les bobines d'induit 26 et le microprocesseur 42 de façon à transmettre à ce dernier un signal de contrôle 46 représentatif du courant circulant dans les bobines 26.

Le microprocesseur 42 peut être d'un quelconque type connu. Ainsi, par exemple, le microprocesseur 42 peut être constitué par un microprocesseur du type "IM 6100 d'intersil".

Comme l'illustre la figure 4, les signaux de commande codés 48 délivrés par le microprocesseur 42 alimentent les entrées de commande d'un nombre pair de multiplexeurs 60. Dans le mode de réalisation décrit, trente-six multiplexeurs 60 sont groupés deux-à-deux de telle sorte que leurs sorties sont connectées à dix-huit portes 62 délivrant des ordres de connexion haut et des ordres de connexion bas appliqués aux dix-huit étages de commutation 32 agissant chacun sur l'un des ensembles de bobinages de l'induit 26.

La position instantanée dans le temps et dans l'espace du rotor 18 par rapport au stator 22 est donnée par dix-huit détecteurs optiques 64, tels que des photo-coupleurs à réflexion, portés par le stator et circonférentiellement répartis autour du rotor en vis-à-vis d'une bande noire 66 fixée sur un disque réfléchissant 65 formé sur le rotor. De préférence, la bande noire 66 couvre un angle de 190°, de telle sorte que chacun des photocoupleurs à réflexion 64 délivre un signal périodique $K_1$ à $K_{18}$ dont la durée est décalée de 10° par rapport à une demi-période, les signaux délivrés par deux détecteurs voisins étant décalés entre eux de 20°. L'ensemble des signaux logiques $K_1$ à $K_{18}$ délivrés par les détecteurs 64 représente ainsi la position instantanée du rotor 18 par rapport au stator 22. Les signaux logiques $K_1$ à $K_{18}$ délivrés par les détecteurs 64 sont appliqués directement à quatre des entrées codées $E_0$ à $E_3$ de chacun des multiplexeurs 60.

Les autres entrées codées $E_4$ à $E_7$ des multiplexeurs sont alimentées par des signaux logiques complémentaires $\overline{K_1}$ à $\overline{K_{18}}$ des signaux $K_1$ à $K_{18}$ délivrés par les détecteurs 64, les signaux $\overline{K_1}$ à $\overline{K_{18}}$ étant créés dans un inverseur 67.

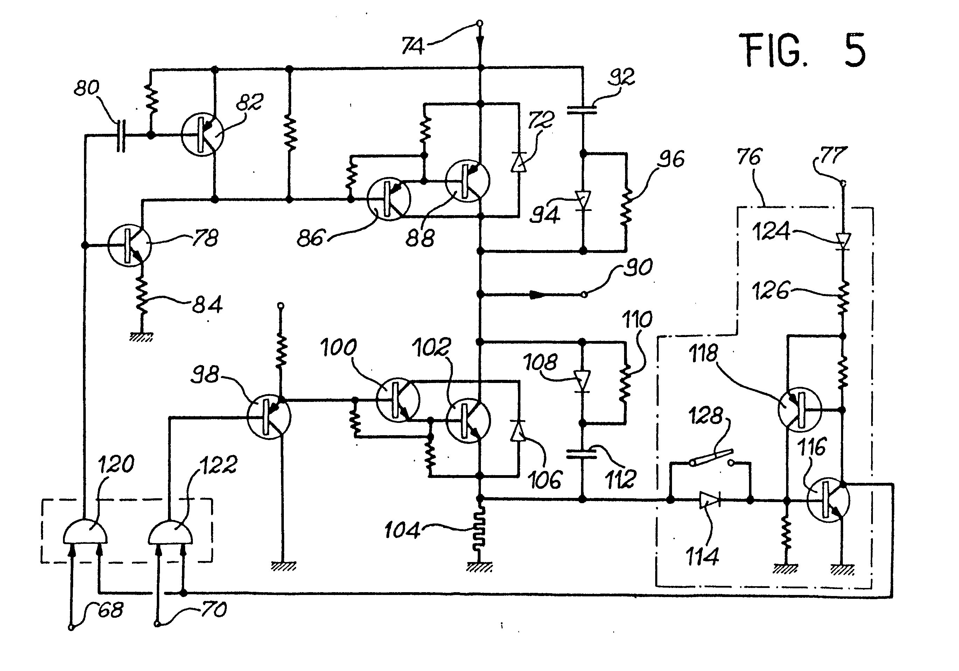

Comme l'illustre en particulier la figure 5, chacun des étages de commutation 32 constitue un étage à transistors de puissance dans lequel les ordres de connexion haut H pénètrent par une borne d'entrée 68 et dans lequel les ordres de connexion bas B pénètrent par une borne d'entrée 70.

Les ordres de connexion haut H qui pénètrent dans chaque moyen de commutation 32 sont appliqués à la base d'un transistor NPN 78 et, par l'intermédiaire d'une capacité 80, à la base d'un transistor PNP 82. L'émetteur du transistor 78 est connecté à la terre par l'intermédiaire d'une résistance 84, tandis que son collecteur, ainsi que le collecteur du transistor 82 sont raccordés à la base d'un transistor PNP 86. L'émetteur du transistor 86 est connecté à la base d'un autre transistor PNP 88, tandis que les collecteurs des transistors 86 et 88 sont connectés entre eux et raccordés à une borne de sortie 90 de l'étage de commutation 32, à laquelle est raccordé l'un des ensembles de bobinages de l'induit 26, comme l'illustre la figure 4. Les émetteurs des transistors 82 et 88 sont également raccordés entre eux et à une source de tension (non représentée) définissant un niveau de tension haut par une borne 74. Une diode 72 est disposée entre les bornes 90 et 74 et passante dans ce sens. De préférence, un système d'aide à la commutation, constitué par une capacité 92 en série avec une résistance 96 est monté entre l'émetteur et le collecteur du transistor 88. La résistance 96 est shuntée par une diode 94 de la capacité 92 vers le collecteur du transistor 88. Ce système permet un fonctionnement fiable du transistor 88. Les ordres de connexion bas qui pénètrent dans chaque étage de commutation 32 sont appliqués à la base d'un transistor PNP 98 dont l'émetteur est connecté à la base d'un transistor NPN 100. L'émetteur du transistor 100 est également connecté à la base d'un transistor NPN 102 dont l'émetteur est connecté à la terre, définissant un niveau de tension bas, par l'intermédiaire d'un shunt 104 et dont le collecteur est connecté à la borne de sortie 90. Une diode 106 relie l'émetteur du transistor 102 aux collecteurs des transistors 100 et 102, et elle est passante dans ce sens. Un système d'aide à la commutation constitué par une résistance 110 et par une capacité 112 est monté en série entre le collecteur et l'émetteur du transistor 102, une diode 108 étant disposée en parallèle sur la résistance 110 et passante au collecteur du transistor 102 vers la capacité 112. Ce système permet d'améliorer la fiabilité du transistor de commutation 102.

Le signal d'émetteur du transistor 102 est appliqué à un dispositif de sécurité 76. Ce dernier comprend une diode 114 passante vers la base d'un transistor NPN 116 et vers le collecteur d'un transistor PNP 118. Le signal à la base du transistor 118 et au collecteur du transistor 116 est appliqué à l'une des entrées de deux portes ET 120 et 122 dont les autres entrées reçoivent les ordres de connexion haut H et bas B admis aux bornes d'entrée 68 et 70. L'émetteur du transistor 118 est connecté par une borne 77 à une source de tension continue (non représentée) par l'intermédiaire d'une diode électroluminescente 124 et d'une résistance 126, alors que l'émetteur du transistor 116 est connecté à la terre. En outre, la diode 114 peut être shuntée par un interrupteur 128.

Bien entendu, chacun des transistors utilisés dans les étages de commutation 32 est convenablement polarisé par des résistances appropriées.

La génératrice à caractéristiques contrôlées décrite en se référant aux figures 3 à 5 fonctionne de la façon suivante.

Lorsque le vent soufflant dans l'hélice 10 fait tourner le rotor 18 de la génératrice 20 par l'intermédiaire du mécanisme de transmission 14, cette rotation engendre dans l'induit 26 un courant dont la conduction est contrôlée dans le temps et dans l'espace au moyen du système logique 30 et des étages de commutation 32, de façon à respecter les consignes 44 entrées dans le microprocesseur 42. Ainsi, en fonction des consignes 44 et des paramètres de contrôle 46 tels que la vitesse de rotation du rotor et l'intensité du courant dans l'induit, le microprocesseur 42 délivre des ordres de commande 48 appliqués aux entrées de commande des multiplexeurs 60, de façon à afficher à la sortie S de ces derniers l'un des signaux logiques $K_1$ à $K_{18}$, ou des signaux complémentaires $\overline{K_1}$ à $\overline{K_{18}}$ délivrés par les détecteurs 64 et appliqués aux entrées codées $E_0$ à $E_7$ des multiplexeurs. Les deux signaux $K$ et $\overline{K}$ ainsi sélectionnés par les ordres de commande 48 délivrés par le microprocesseur 42 sont additionnés pour chaque paire de multiplexeurs 60 par la porte ET 62 correspondante, de façon à définir des ordres de connexion haut $H_1$ à $H_{18}$ et des ordres de connexion bas $B_1$ à $B_{18}$ qui sont appliqués aux bornes d'entrée 68 et 70 de l'étage de commutation 32 correspondant. Grâce au système logique selon l'invention, il est ainsi possible, en choisissant convenablement les signaux $K$ ou $\overline{K}$ en provenance des capteurs 64 au moyen des ordres 48 délivrés par le microprocesseur 42, de contrôler avec précision le début et la fin, ou la durée dans le temps et dans l'espace, des signaux $H$ et $B$ délivrés par les portes ET 62, de façon à contrôler au moyen des étages de commutation 32 la conduction dans les ensembles de bobinages 26.

Dans le mode de réalisation représenté, le microprocesseur 42 délivre seulement deux ordres de commande 48 qui sont appliqués respectivement aux entrées de commande de chacune des deux séries de multiplexeurs 60. Cependant, cette variante de réalisation n'est pas limitative et le microprocesseur 42 pourrait délivrer un ordre de commande différent pour chaque multiplexeur ou pour des groupes de multiplexeurs différents. Par ailleurs, dans le mode de réalisation représenté, le signal délivré par la porte ET 62 disposée à la sortie de chaque paire de multiplexeurs 60 constitue à la fois un ordre de connexion haut $H_1$ à $H_{18}$ pour un premier étage de commutation 32 et un ordre de connexion bas $B_1$ à $B_{18}$ pour un autre étage de commutation 32, ce qui permet de réduire de moitié le nombre de multiplexeurs 60. Cependant, dans un autre mode de réalisation non représenté, un groupe de quatre multiplexeurs différents pourrait être associé à chaque étage de commutation 32.

Lorsqu'un ordre de connexion haut H est appliqué à la borne d'entrée 68 d'un étage de commutation 32, le transistor 88 se débloque de façon à fermer le circuit comprenant l'ensemble de bobinages 26 raccordé à la sortie 90 sur le niveau de tension haut pour initier la conduction dans cet ensemble et le transistor 88 se bloque à nouveau à la fin de l'ordre de connexion haut H, pour stopper la conduction dans l'ensemble de bobinages 26 correspondant. Lorsqu'un ordre de connexion bas B est ensuite injecté à la borne d'entrée 70 de l'un des étages de commutation 32, le transistor 102 se débloque pour fermer le circuit comprenant l'ensemble de bobinages correspondant sur le niveau de tension bas et initier la conduction dans cet ensemble de bobinages. La fin de la conduction sur le niveau de tension bas est déterminée par la fin de l'ordre de connexion bas appliqué à la borne d'entrée 70 qui entraîne le blocage du transistor 102.

Le début et la fin de la conduction de chacun des ensembles de bobinages 26 de l'induit peuvent ainsi être contrôlés avec précision en choisissant et en combinant les signaux K émis par les détecteurs 64, de façon à éliminer les pertes par effet Joule (voir figures 1b et 2), et de façon à contrôler les caractéristiques de la génératrice 20 en fonction des paramètres de consigne 44.

Les ordres de commande 48 délivrés par le microprocesseur 42 peuvent également être tels que l'un ou plusieurs des commutateurs 32 sont maintenus constamment ouverts ou fermés, de telle sorte que certains des ensembles de bobinages 26 ne sont pas alimentés et que d'autres ensembles sont mis en série, ce qui a pour effet de réduire la tension dans chaque spire.

Par ailleurs, il est également possible, en hachant les ordres de commande 48 délivrés par le microprocesseur, de découper la tension d'alimentation au niveau de chaque ensemble de bobinages 26 sans qu'il soit nécessaire d'utiliser un hacheur puissant pour réduire la tension d'induit dans la génératrice.

Le dispositif de sécurité 76 de chaque étage de commutation 32 permet, lorsque l'interrupteur 128 est ouvert, de réaliser une limitation de courant en remplissant le rôle d'un disjoncteur ouvrant le circuit de l'ensemble de bobinages correspondant dès l'apparition d'une surintensité. Lorsque l'interrupteur 128 est fermé, le dispositif 76 réalise une simple limitation en courant puisque ce dispositif ouvre alors le circuit dès l'apparition d'une surintensité et le referme dès que le courant est redescendu.

Selon une variante de réalisation de l'invention (non représentée), l'électroaimant de l'inducteur comprend au moins trois ensembles de bobinages indépendants dans lesquels le début et la fin de la conduction dans le temps et dans l'espace sont déterminés également par le système logique 30 d'une façon comparable à celle qui vient d'être décrite pour le contrôle de la conduction dans les ensembles de bobinages 26 de l'induit.

Selon encore une autre variante de réalisation de l'invention (non représentée), l'électroaimant de l'inducteur comprend un bobinage divisé en plusieurs parties connecté à des bagues d'alimentation dont l'alimentation en courant est contrôlée par le système logique 30 de façon, par exemple, à modifier la forme du champ et son intensité au cours du fonctionnement de la génératrice.

Bien entendu, l'invention n'est pas limitée aux modes de réalisation qui viennent d'être décrits à titre d'exemple, mais en couvre toutes les variantes. Ainsi, l'invention s'applique à des machines électriques de tous types, c'est-à-dire aussi bien génératrices que motrices, à courant continu et à courant alternatif, linéaires ou rotatives, synchrones ou asynchrones, etc... En outre, une machine électrique réalisée conformément à l'invention peut être utilisée pour de nombreuses applications et n'est pas limitée au dispositif éolien décrit.

L'invention s'applique également aux machines dont l'induit est constitué par un métal conducteur susceptible de se déplacer comme : pompes, générateurs ou actionneurs magnéto-hydro-dynamiques. Elle peut également être appliquée dans les fours de fonte des métaux pour permettre le brassage contrôlé du métal en fusion.

REVENDICATIONS

1) Machine électrique à caractéristiques contrôlées, comprenant une partie fixe (22) et une partie mobile (18) et susceptible de transformer de l'énergie mécanique en énergie électrique, ou inversement, au moyen d'un inducteur et d'un induit, caractérisée en ce que l'inducteur et/ou l'induit comprennent au moins deux ensembles de bobinages indépendants (26) dans lesquels le début et la fin de la conduction dans le temps et dans l'espace sont imposés par un processeur (42) à mémoire piloté, d'une part, par au moins un signal de contrôle représentatif, par exemple, de la vitesse de déplacement et/ou de la position du champ magnétique engendré par l'inducteur et, d'autre part par un programme enregistré en mémoire, afin de modifier en temps réel les caractéristiques de fonctionnement de la machine.

2) Machine électrique selon la revendication 1, caractérisée en ce que le processeur (42) contrôle, de plus, l'interconnexion d'au moins deux des ensembles de bobinages (26) de l'induit et/ou de l'inducteur.

3) Machine électrique selon l'une quelconque des revendications 1 ou 2, caractérisée en ce que des moyens de détection (64, 65) sont prévus pour détecter la position instantanée du champ inducteur de la machine, le processeur (42) délivrant des ordres de commande codés, et un moyen de commutation (32) indépendant étant associé à chaque ensemble de bobinages (26) pour commander l'ouverture d'un circuit comprenant ledit ensemble de bobinages ou la fermeture de ce circuit sur des niveaux de tension appropriés, lorsque le champ magnétique inducteur occupe les positions correspondant aux ordres de commande codés.

4) Machine électrique selon la revendication 3, caractérisée en ce que les moyens de détection (64, 65) délivrent des signaux logiques dont l'ensemble est représentatif de la position instantanée du champ magnétique inducteur, l'un de ces signaux logiques, ou un signal complémentaire, étant appliqué à chacune des entrées codées d'un
nombre pair de multiplexeurs (60) dont les entrées de commande sont sensibles aux ordres de commande délivrés par
le processeur (42) pour délivrer à leur sortie le signal
logique appliqué à l'entrée (62) codée correspondante, les
signaux logiques délivrés par chaque multiplexeur (60) étant
groupés deux à deux pour définir des ordres de connexion
ou/et de commutation appliqués à chacun des moyens de commutations (32).

5) Machine électrique selon la revendication
4, caractérisée en ce que chaque moyen de commutation (32)
comprend au moins deux groupes de semiconducteurs de puissance sensibles aux ordres de connexion pour fermer le circuit de l'ensemble de bobinages (26) correspondant sur le
niveau de tension approprié.

6) Machine électrique selon la revendication
5, caractérisée en ce que des moyens de disjonction (128)
sont associés à chaque moyen de commutation pour ouvrir durablement le circuit de l'ensemble de bobinages correspondant lorsque l'intensité du courant dépasse un seuil déterminé.

7) Machine électrique selon la revendication
5, caractérisée en ce que des moyens de limitation de courant (76) sont associés à chaque moyen de commutation pour
ouvrir ou fermer le circuit de l'ensemble de bobinages correspondant (26) lorsque l'intensité du courant est supérieure ou inférieure à un seuil déterminé.

8) Machine électrique selon l'une quelconque
des revendications 4 à 7, caractérisée en ce que les ordres
de commande codés délivrés par le processeur (42) sont tels
que les ordres de connexion appliqués à un ou plusieurs des
moyens de commutation sont hachés, de telle sorte que la
tension d'alimentation du ou des ensembles de bobinages correspondants (26) est découpée à une fréquence déterminée.

9) Machine électrique selon l'une quelconque des revendications 4 à 8, caractérisée en ce que les moyens de détection (64, 65) comprennent plusieurs détecteurs (64) répartis sur la partie fixe de la machine de façon à délivrer les signaux logiques caractérisant la position du champ magnétique inducteur.

10) Machine électrique selon l'une quelconque des revendications 2 à 9, caractérisée en ce que seuls les enroulements d'induit comprennent au moins deux ensembles de bobinages indépendants (26) dans lesquels le début et la fin de la conduction dans le temps et dans l'espace sont déterminés par le processeur (42).

11) Machine électrique selon la revendication 10, caractérisée en ce que l'inducteur est bobiné et divisé électriquement en plusieurs parties raccordées à des bornes d'alimentation, de telle sorte que la forme et l'intensité du champ magnétique créé par l'inducteur sont contrôlées par le processeur (42).

12) Machine électrique selon l'une quelconque des revendications 2 à 9, caractérisée en ce que seuls les enroulements d'inducteur comprennent au moins deux ensembles de bobinages indépendants (26) dans lesquels le début et la fin de conduction dans le temps et dans l'espace sont déterminés par le processeur (42).

13) Machine électrique selon l'une quelconque des revendications précédentes, caractérisée en ce que l'inducteur est composé d'un électro-aimant et d'un aimant permanent.

14) Machine électrique selon l'une quelconque des revendications précédentes, caractérisée en ce que l'inducteur est réalisé en matériau magnétique fragmenté selon des surfaces sensiblement parallèles au champ magnétique engendré par l'inducteur, les différents fragments étant séparés par des lames (36) en un matériau amagnétique.

15) Machine électrique selon la revendication 14, caractérisée en ce que le matériau amagnétique est un matériau bon conducteur de l'électricité, les lames étant connectées aux bornes d'alimentation (40) pour véhiculer le courant d'excitation du bobinage de l'inducteur.

16) Dispositif éolien comprenant une hélice montée sur l'arbre d'entrée (12) d'un mécanisme de transmission dont l'arbre de sortie (16) entraîne en rotation le rotor (18) d'une génératrice (20), caractérisé en ce que la génératrice (20) est une machine électrique réalisée selon l'une quelconque des revendications précédentes.

FIG. 1a

FIG. 1b

FIG. 2

FIG. 3

10

14

12

24

26

34

16

20

22

18

38

40

36

28

32 30

2/4

002200

FIG. 4

FIG. 5

0022003

**Office européen des brevets**

**RAPPORT DE RECHERCHE EUROPEENNE**

Numero de la demande

EP 80 40 0911

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendica-tion concernée | |
| | FR - A - 2 006 575 (TOYO DENKI SEIZO KABUSHIKI KAISHA)<br>* Page 3, ligne 17 à page 4, ligne 22; page 5, ligne 29 à page 6, ligne 21; figures 1,3 *<br><br>-- | 1,2,7 | H 02 P 7/00 |
| | GB - A - 1 293 291 (TOKYO SHIBAURA ELECTRIC COMPANY LTD.)<br>* Page 7, lignes 64-119; figures 7,8 *<br><br>-- | 1,2 | |
| | FR - A - 2 191 338 (ALLIS CHALMERS CORP.)<br>* Page 46, lignes 1-30; figure 1 *<br><br>-- | 1,2,10 11 | DOMAINES TECHNIQUES RECHERCHES (Int. Cl. ³)<br><br>H 02 P 7/00<br>H 02 K 29/00<br>29/02<br>29/04 |
| | FR - A - 2 195 869 (ALLIS CHALMERS CORP.)<br>* Page 4, ligne 36 à page 5, ligne 27 *<br><br>-- | 1,2,10 11 | |
| A | FR - A - 1 398 393 (SIEMENS-SCHUCKERT A.G.)<br>* Page 3, colonne de gauche, ligne 53 à page 4, colonne de droite, ligne 3; figure 6 *<br><br>-- | 1 | CATEGORIE DES DOCUMENTS CITES<br><br>X: particulièrement pertinent<br>A: arrière-plan technologique<br>O: divulgation non-écrite<br>P: document intercalaire<br>T: théorie ou principe à la base de l'invention<br>E: demande faisant interférence<br>D: document cité dans la demande<br>L: document cité pour d'autres raisons |
| A | DE - B - 1 231 794 (SIEMENS A.G.)<br>* Colonne 2, ligne 52 à colonne 3, ligne 28; figure 1 *<br><br>---- | 1 | |
| X | Le présent rapport de recherche a été établi pour toutes les revendications | | &: membre de la même famille, document correspondant |

| Lieu de la recherche | Date d'achèvement de la recherche | Examinateur |
|---|---|---|
| La Haye | 11-09-1980 | WEIHS |

OEB Form 1503.1 06.78